# FASCICULE DE BREVET EUROPEEN

(11) **EP 1 445 194 B1**
(45) Date de publication et mention de la délivrance du brevet: **12.10.2005**
(21) Numéro de dépôt: 04076053.0
(22) Date de dépôt: 19.04.2002
(51) Int. Cl.: B64D 7/08, F41F 3/06

(54) **Lance-missile à patins d'éjection**
Flugkörperwerfer mit Auswerfgleitschienen
Missile launcher with ejection skids

(30) Priorité: 27.04.2001 FR 0105735
(43) Date de publication de la demande: 11.08.2004
(62) Demande divisionnaire de: 02290999.8
(73) Titulaire: MBDA France, 75016 Paris (FR)
(72) Inventeur: Grandinetti, Antoine, 78000 Versailles (FR)
(74) Mandataire: Bérogin, Francis

(56) Documents cités:
- FR-A- 2 664 373
- US-A- 4 008 645
- US-A- 4 679 751

## Description

La présente invention a pour objet un lance-missile destiné à être monté sur un aéronef, du type comportant des moyens permettant d'écarter le missile de l'aéronef avant allumage du propulseur du missile, moyens exerçant, sur le missile, une force tendant à le chasser à distance de l'aéronef.

Le document EP-A-0 192 579 décrit un tel lance-missile comportant, sur une structure support, des moyens désarmables d'accrochage du missile, un patin d'appui sur le missile relié à la structure support par des biellettes articulées de façon à constituer un quadrilatère déformable, proche d'un parallélogramme, et des moyens à pression de fluide pour, successivement, désarmer les moyens d'accrochage et commander les biellettes dans un sens provoquant la poussée du missile par le patin, ce dernier ayant une longueur suffisante pour fixer non seulement la distance entre le missile et l'aéronef, mais aussi l'orientation angulaire du missile. Cette disposition vise à fixer la position et la vitesse angulaire du missile en tangage lorsqu'il échappe à la poussée du patin.

Le document US-A-4 008 645 décrit un lance-missile selon le préambule de la revendication 1.

L'invention vise à fournir un lance-missile du type connu par US-A-4 008 645 et présentant des performances supérieures à celles des dispositifs antérieurement connus, tout en ayant un encombrement réduit.

Dans ce but, l'invention propose un lance-missile suivant la partie caractérisante de la revendication 1. Des caractéristiques supplémentaires optionnelles sont définies dans les revendications dépendantes 2 à 7.

La disposition ci-dessus permet de placer les patins à grande distance l'un de l'autre et de fixer la position et la vitesse angulaire du missile de façon précise. Par ailleurs, elle laisse une grande liberté dans l'orientation de l'actionneur et permet de tenir facilement compte des contraintes d'encombrement.

Le terme "missile" doit être entendu dans un sens large et comme indiquant toute charge destinée à être éjectée d'un aéronef pour prendre une trajectoire propre, à laquelle il faut donner une orientation initiale déterminée.

En général deux patins seulement sont prévus ; toutefois trois patins et plus peuvent être utiles pour un missile de grande longueur ou de flexibilité élevée.

L'invention vise également, à titre complémentaire, à fournir un lance-missile du type précité permettant de limiter ou même de contrôler les efforts qu'il exerce sur le missile lors de l'éjection. Dans ce but, l'invention propose un lance-missile comportant, sur sa tringlerie ou sur l'actionneur, des moyens de freinage exerçant une force réglable ou asservie, antagoniste à celle de l'actionneur.

L'emploi d'un asservissement utilisant, comme paramètre d'entrée, le signal fourni par un ou des capteurs placés sur la tringlerie ou les patins permet de contrôler en permanence l'accélération et/ou la force appliquée au missile, de limiter les effets d'impact et les amplifications dynamiques et d'éviter d'exciter des modes propres de vibration.

Les caractéristiques ci-dessus, ainsi que d'autres, avantageusement utilisables en liaison avec les précédentes, mais pouvant l'être indépendamment, apparaîtront à la lecture de la description qui suit de modes particuliers de réalisation. La description se réfère aux dessins qui l'accompagnent, dans lesquels:
- la figure 1 est un schéma qui montre un mode de réalisation dans lequel I'actionneur exerce une poussée dans le sens orthogonal à l'axe du missile,
- la figure 2 est une vue en coupe suivant un plan de symétrie, d'un lance-missile dont l'actionneur présente la disposition représentée en figure 1;
- la figure 3 est une vue en perspective du lance-missile de la figure 2, la structure support n'étant pas représentée et l'actionneur étant dans la disposition qu'il présente en fin de course d'éjection.

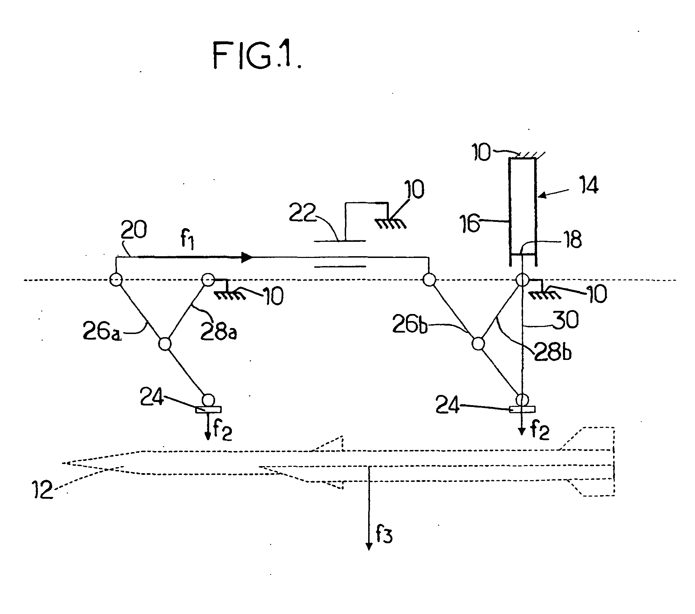

Le lance-missile dont le schéma est donné en figure 1 est porté par une structure support schématisée par les points d'ancrage 10. Cette structure support est prévue pour être fixée à l'ossature d'un aéronef d'emport. Elle comporte généralement, en plus des organes schématisés sur la figure 1, un rail d'accrochage destiné à recevoir des ferrures dont est muni le missile 12 à éjecter. La forme du missile représenté est celle d'un engin autopropulsé, mais l'invention est applicable à tout autre type de charge, en particulier à tout missile, qu'il soit ou non propulsé, qu'il soit ou non guidé.

Le dispositif comprend un actionneur 14 dont le mode de réalisation montré en figure 1 est constitué par un vérin ayant un corps fixe 16 et un piston 18 fixé à une tige 30.

Le dispositif comprend également une tige 20 de transmission de mouvement guidée par un module 22 fixé à la structure support, et dont on verra plus loin que ce module 22 peut remplir une fonction de freinage ou d'amortisseur en plus de sa fonction de guidage.

La tige 20 appartient à une tringlerie destinée à déplacer les patins d'éjection 24 d'une position initiale à la position de la figure 1,
lorsque l'actionneur 14 est mis en oeuvre. Cette tringlerie comporte, pour chaque patin 24, une bielle 26a ou 26b. Des axes respectifs relient une des extrémités de chaque bielle à la tige 20 et l'autre extrémité de la même bielle à un des patins 24. Les extrémités d'une biellette 28a sont reliées l'une à un point intermédiaire de la bielle 26a, l'autre à un des points fixes 10. Une biellette 28b est associée de la même façon à la bielle 26b.

Dans le cas illustré sur la figure 1, les bielles 26a et 26b sont de même longueur, ainsi que les biellettes 28a et 28b. Mais ces longueurs peuvent être légèrement différentes, lorsque l'on souhaite imprimer un mouvement de tangage au missile à l'instant de sa libération.

Le fonctionnement du lance-missile est le suivant. Lorsque le vérin 14 est alimenté, dès la libération du missile, il déplace la tige 20 dans la direction indiquée par la flèche f₁. La tringlerie transforme le déplacement du piston 18, dans une direction perpendiculaire à l'orientation, au moins initiale, de l'axe du missile 12, en un déplacement des patins 24 dans le sens indiqué par les flèches f2. Les forces ainsi exercées repoussent progressivement le missile 12 qui se sépare des patins 24 lorsque le vérin 14 arrive en fin de course (figure 1). A ce moment, le missile présente une vitesse d'éloignement de l'avion dans la direction indiquée par la flèche f₃.

Dans le cas illustré sur la figure I, les bielles 26a et 26b constituent, avec la tige 20 et le plan d'appui des patins 24 sur le missile 12, un parallélogramme déformable ne donnant aucune vitesse de tangage au missile 12. Mais, par exemple en donnant aux biellettes 28a et 28b des longueurs différentes, il est possible d'imprimer au missile une vitesse de tangage qui l'éloigne de l'avion. Dans tous les cas, l'orientation angulaire en tangage du missile, lorsque les patins 24 atteignent la fin de leur course, ne dépend que de la tringlerie.

Le mode de réalisation montré sur la figure 1, est tel que le vérin 14 est disposé orthogonalement à l'axe du missile 12. La tige de transmission de mouvement 20 n'est pas reliée au piston 18. Elle relie simplement les extrémités des bielles 26a et 26b. Le piston 18 est relié à l'un des patins 24 (le patin arrière dans le cas de la figure 1). La tringlerie oblige la bielle 26a à suivre le déplacement de la bielle 26b imposé par la tige 30 du vérin 14.

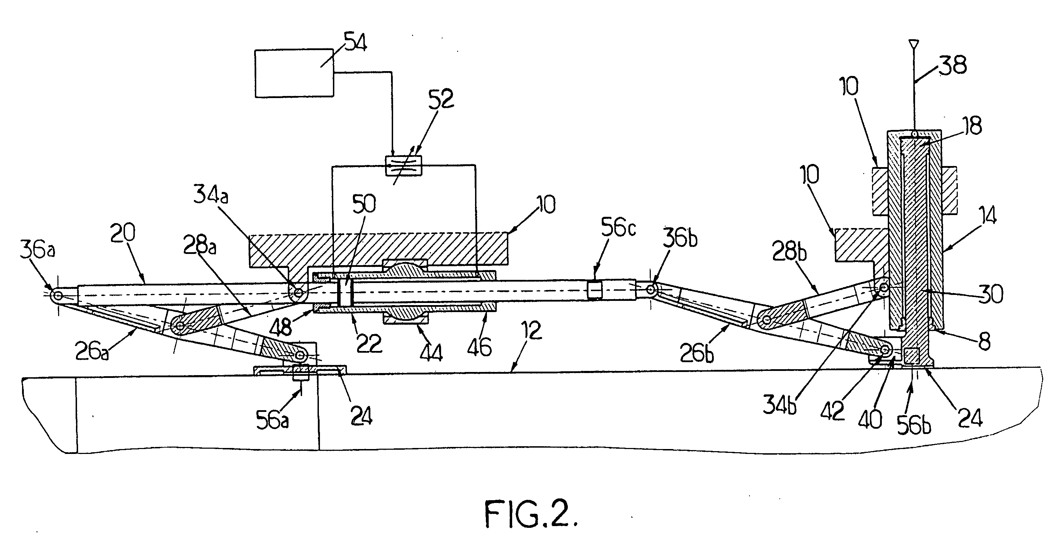

La figure 2 montre un mode possible de réalisation du lance-missile 25 dont la constitution de principe est montrée en figure 1. De nouveau, les mêmes numéros de référence sont utilisés pour désigner les organes correspondants.

La figure 2 montre les axes 34a et 34b de basculement des biellettes 28a et 28b sur des éléments de la structure support, encore désignée par le repère 10. D'autres axes 36a et 36b relient les bielles 26a et 26b à la tige 20 de transmission de mouvement.

Le lance-missile montré en figure 1 comporte un module 22 de guidage qui assure également une fonction de freinage du déplacement.

Le vérin 14 représenté sur la figure 2 est à pression de fluide et alimenté par une conduite 38. Sa tige de piston 30 présente une oreille ou chape 40 traversée par l'axe 42 d'articulation de la biellette 26b. Ce vérin peut notamment être hydraulique et utiliser le fluide hydraulique à pression élevée disponible sur un avion. Il peut ainsi être de faible diamètre tout en fournissant une poussée élevée. L'extrémité de la tige 30 peut constituer le patin d'éjection arrière, car il n'est pas nécessaire que ce patin soit articulé sur la tige.

Du fait de la présence d'un module de freinage 22 susceptible d'être asservi, on peut admettre l'utilisation d'un actionneur dont la variation de poussée au cours de sa course n'est pas directement ajustable ou réglable, par exemple un actionneur à gaz de poudre.

Le module 22 comporte un boîtier à rotule 44 destiné à le fixer sur la structure support. Dans ce boîtier est monté, par une liaison universelle permettant un débattement angulaire limité dans tous les plans, un corps amortisseur et de guidage 46. La tige 20 est guidée par des alésages ménagés dans le fond du corps 46 et dans un obturateur 48. Le corps 46 et l'obturateur 48 définissent une chambre séparée en deux compartiments par un renflement 50 de la tige, formant piston. Les deux compartiments communiquent l'un avec l'autre par un organe d'étranglement 52 présentant une section de passage réglable par un organe de commande 54. Le circuit comprenant les deux compartiments, l'organe d'étranglement et les conduites qui les relient, constituent un dash pot. On connaît déjà des organes d'étranglement à réglage rapide de la section de passage, par exemple utilisant des éléments piézoélectriques.

Par action sur la perte de charge provoquée par l'organe d'étranglement 52, il est possible de régler la force de frottement fluide qui s'oppose à l'action du vérin 14. En général, c'est l'accélération donnée au missile que l'on souhaite contrôler, ou au moins limiter. Pour cela, l'organe de commande peut être prévu pour régler la section de passage en fonction des signaux reçus par des capteurs placés sur la tringlerie ou les patins. De tels capteurs peuvent notamment être placés aux emplacements indiqués par 56a, 56b et 56c sur la figure 2. Ces capteurs peuvent mesurer directement l'accélération ou, dans le cas des capteurs 56a et 56b, être constitués par des capteurs de force indiquant la pression appliquée sur le corps du missile.

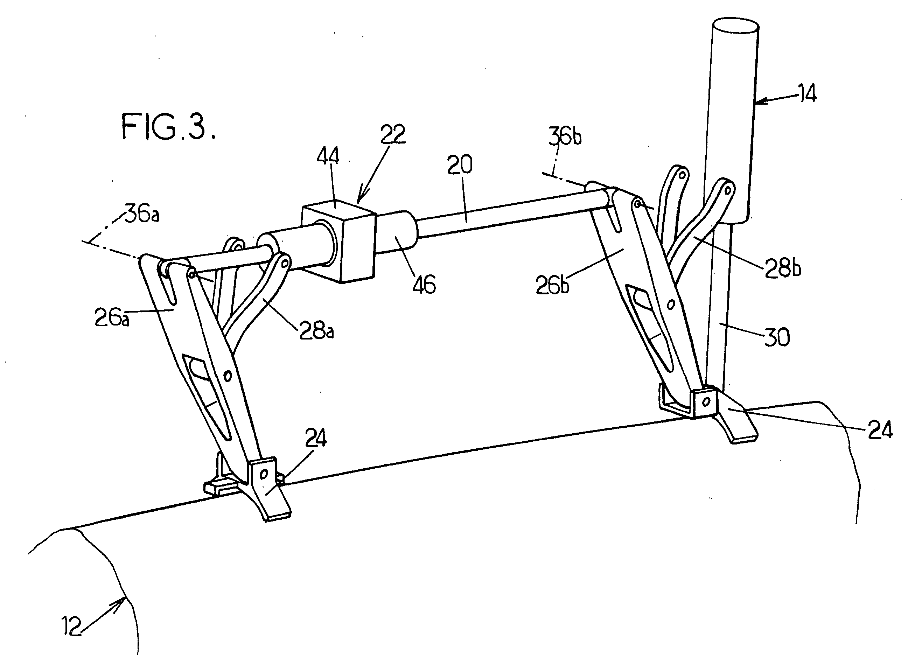

Une constitution réelle possible du lance-missile est montrée sur la figure 3, où les organes déjà représentés sont encore désignés par le même numéro de référence. On voit que les biellettes 28a et 28b sont en forme de fourche, de façon à laisser la place nécessaire à la tige 20 et à présenter la rigidité requise. Les bielles 26a et 26b sont elles-mêmes de forme plate et présentent des chapes terminales de réception des axes 36a et 36b. Les patins 24 ont une forme courbe permettant un meilleur appui sur le corps du missile.

Le mode d'amortissement des efforts et les accélérations qui vient d'être décrit est susceptible d'être appliqué à des lance-missiles, ou plus généralement à des dispositifs d'éjection de charge, ayant une constitution différente de celle qui a été donnée à titre d'exemple.

Le lance missile qui vient d'être décrit présente une grande facilité d'adaptation aux différents porteurs et missiles. Le changement d'écartement des patins implique seulement le remplacement de la tige de transmission. Il existe une grande liberté quant à l'emplacement et l'orientation de l'actionneur.

Les éléments habituels d'un lance-missile, non décrits ici, sont donnés par exemple dans le document EP-A-0 192 579 auquel on pourra se reporter.

## Revendications

1. Lance-missile destiné à être monté sur un aéronef, comportant des moyens permettant d'écarter un missile (12) de l'aéronef et exerçant, sur le missile, une poussée tendant à l'amener à distance de l'aéronef, lesdits moyens ayant, sur une structure support (10) au moins deux patins (24) d'appui sur le missile (12), reliés à la structure support (10) chacun par une bielle (26a, 26b) articulée sur la structure de façon à constituer un pantographe et un actionneur unique (14) à déplacement linéaire relié aux bielles (26a, 26b) par des moyens constituant une tringlerie de commande simultanée des deux bielles dans un sens provoquant la poussée du missile (11) par les patins (24), **caractérisé en ce que** l'actionneur (14) est placé de façon à exercer une force qui est transversale à l'axe d'une tige (20) de transmission de mouvement d'une bielle (26a, 26b) à l'autre, et que la tige (20) traverse un module (22) de guidage ayant un boîtier (44) fixé à la structure support (10) et un corps (46) de guidage de tige relié au boîtier (44) par une liaison universelle.

2. Lance-missile selon la revendication 1, **caractérisé en ce que** l'actionneur (14) agit directement sur un des patins (24) et agit sur l'autre patin par l'intermédiaire de la tige (20).

3. Lance-missile selon l'une quelconque des revendications 1 et 2, **caractérisé en ce qu'**il comporte sur la tringlerie, des moyens de freinage (46, 48, 50, 52) exerçant une force réglable ou asservie, antagoniste à celle de l'actionneur (14).

4. Lance-missile selon la revendication 3, **caractérisé en ce que** les moyens de freinage sont constitués par un dash-pot (46, 48, 50, 52) à organe d'étranglement (52) ayant une section de passage de fluide réglable.

5. Lance-missile selon la revendication 4, **caractérisé en ce qu'**il comporte un organe de commande (54) modifiant ladite section de passage en réponse à un signal fourni par un ou des capteurs(56a, 56b, 56c) de force ou d'accélération placé sur la tringlerie ou les patins (24).

6. Lance-missile selon l'une quelconque des revendications 1 à 5, **caractérisé en ce que** chaque bielle (26a, 26b) est reliée à la structure support (10) par une biellette (28a, 28b) articulée sur la bielle en un point intermédiaire entre le patin (24) correspondant et un axe de liaison avec une tige (20) de transmission de mouvement d'une bielle (26a, 26b) à l'autre.

7. Lance-missile selon l'une quelconque des revendications 1 à 6, **caractérisé en ce que** l'actionneur (14) exerce une poussée dans le sens orthogonal à l'axe du missile (12).

## Patentansprüche

1. Flugkörper-Werfer, der für die Montage an einem Luftfahrzeug bestimmt ist, umfassend Mittel, die es erlauben, einen Flugkörper (12) von dem Luftfahrzeug weg zu bewegen und die auf den Flugkörper einen Druck ausüben, der dazu dient, ihn in Abstand zu dem Luftfahrzeug zu bringen, wobei die Mittel an einer Haltekonstruktion (10) zumindest zwei Tragsegmente (24) zur Anlage an dem Flugkörper umfassen, die jeweils durch ein Zwischenglied (26a, 26b), das an der Konstruktion derart angelenkt ist, dass ein Pantograph gebildet wird, mit der Haltekonstruktion (10) verbunden sind, und eine alleinige linear bewegbare Betätigungsvorrichtung (14), die mit den Zwischengliedern (26a, 26b) durch Mittel verbunden ist, die ein Gestänge bilden für die simultane Betätigung der beiden Zwischenglieder in eine Richtung, die den Abstoß des Flugkörpers (12) durch die Tragsegmente (24) herbeiführt,
**dadurch gekennzeichnet, dass** die Betätigungsvorrichtung (14) derart angeordnet ist, dass sie eine Kraft ausübt, die transversal zur Achse einer Stange (20) für die Bewegungsübertragung von einem Zwischenglied (26a, 26b) auf das andere ist, und dass die Stange (20) ein Führungsmodul (22) durchquert, das ein an der Haltekonstruktion (10) befestigtes Gehäuse (44) und einen durch eine Universalverbindung mit dem Gehäuse (44) verbundenen Stangenführungskörper (46) hat.

2. Flugkörper-Werfer nach Anspruch 1, **dadurch gekennzeichnet, dass** die Betätigungsvorrichtung (14) auf eines der Tragsegmente (24) direkt und auf das andere Tragsegment mittels der Stange (20) einwirkt.

3. Flugkörper-Werfer nach einem der Ansprüche 1 und 2, **dadurch gekennzeichnet, dass** dieser an dem Gestänge Bremsmittel (46, 48, 50, 52) aufweist, die eine einstellbare oder geregelte Kraft ausüben, die jener der Betätigungsvorrichtung (14) entgegenwirkt.

4. Flugkörper-Werfer nach Anspruch 3, **dadurch gekennzeichnet, dass** die Bremsmittel durch einen Dämpfungszylinder (46, 48, 50, 52) mit einem einen einstellbaren Fluid-Durchlassquerschnitt aufweisen-den Drosselungsorgan (52) gebildet sind.

5. Flugkörper-Werfer nach Anspruch 4, **dadurch gekennzeichnet, dass** dieser ein Steuer/Regelorgan (54) umfasst, das den Durch-lassquerschnitt in Reaktion auf ein Signal ändert, das durch einen Messwertgeber oder durch Messerwertgeber (56a, 56b, 56c) für Kraft oder Beschleunigung geliefert wird, der/die an dem Gestänge oder den Tragsegmenten (24) angeordnet ist/sind.

6. Flugkörper-Werfer nach einem der Ansprüche 1 bis 5, **dadurch gekennzeichnet, dass** jedes Zwischenglied (26a, 26b) mit der Haltekonstruktion (10) durch einen Schwingarm (28a, 28b) verbunden ist, der an einem Zwischenpunkt zwischen dem entsprechenden Tragsegment (24) und einer Verbindungsachse mit einer Stange (20) zur Bewegungsübertragung von einem Zwischenglied (26a, 26b) auf das andere an dem Zwischenglied angelenkt ist.

7. Flugkörper-Werfer nach einem der Ansprüche 1 bis 6, **dadurch gekennzeichnet, dass** die Betätigungsvorrichtung (14) einen Druck in der zur Achse des Flugkörpers (12) orthogonalen Richtung ausübt.

## Claims

1. Missile launcher intended to be mounted on an aircraft, comprising means allowing a missile (12) to be moved away from the aircraft and exerting on the missile a thrust tending to bring it at a distance from the aircraft, said means having on a support structure (10) at least two skids (24) bearing on the missile (12) and each connected to the support structure (10) by a link (26a, 26b) articulated on the structure in such a way as to form a pantograph and a single linear displacement actuator (14) connected to the links (26a, 26b) by means forming a linkage system which simultaneously controls the two links in a direction causing thrust on the missile (11) by the skids (24), **characterised in that** the actuator (14) is disposed so as to exert a force which is transversal to the axis of a rod (26a, 26b) for transmitting movement from one link (26a, 26b) to the other and that the rod (20) extends through a guide module (22) having a casing (44) fixed to the support structure (10) and a rod guide member (46) connected to the casing (44) by a universal joint.

2. Missile launcher according to Claim 1, **characterised in that** the actuator (14) acts directly on one of the skids (24) and acts on the other skid and acts on the other skid through the rod (20).

3. Missile launcher according to any one of the Claims 1 and 2, **characterised in that** it comprises on the linkage system braking means exerting an adjustable or servo-controlled force opposing that of the actuator (14).

4. Missile launcher according to Claim 3, **characterised in that** the braking means are formed by a dash-pot (46, 48, 50, 52) with a throttle means (52) having an adjustable fluid passage section.

5. Missile launcher according to Claim 4, **characterised in that** it comprises a control member (54) which changes said passage section in response to a signal delivered by one or more force or acceleration sensors (56a, 56b, 56c) disposed on the linkage system or the skids (24).

6. Missile launcher according to any one of the Claims 1 to 5, **characterised in that** each link (26a, 26b) is connected to the support structure (10) by a small link (28a, 28b) articulated on the link in an intermediate point between the corresponding skid (24) and a connection axis with a rod for transmitting the movement from one link (26a, 26b) to the other.

7. Missile launcher according to any one of the Claims 1 to 6, **characterised in that** the actuator (14) exerts a thrust in the orthogonal direction to the axis of the missile (12).
